# EUROPÄISCHE PATENTSCHRIFT

(11) **EP 2 665 631 B1**
(45) Veröffentlichungstag und Bekanntmachung des Hinweises auf die Patenterteilung: **08.06.2016**
(21) Anmeldenummer: 11785445.5
(22) Anmeldetag: 23.11.2011
(51) Int. Cl.: B60T 8/40

(54) **BREMSSYSTEM FÜR EIN FAHRZEUG UND VERFAHREN ZUM BETREIBEN EINES BREMSSYSTEMS FÜR EIN FAHRZEUG**
BRAKE SYSTEM FOR A VEHICLE AND METHOD FOR OPERATING A BRAKE SYSTEM FOR A VEHICLE
SYSTÈME DE FREINAGE POUR UN VÉHICULE ET PROCÉDÉ PERMETTANT DE FAIRE FONCTIONNER UN SYSTÈME DE FREINAGE POUR UN VÉHICULE

(30) Priorität: 21.01.2011 DE 102011002966
(43) Veröffentlichungstag der Anmeldung: 27.11.2013
(73) Patentinhaber: Robert Bosch GmbH, 70442 Stuttgart (DE)
(72) Erfinder: BAUMANN, Dietmar, 71282 Hemmingen (DE)
(86) Internationale Anmeldenummer: PCT/EP2011/070762
(87) Internationale Veröffentlichungsnummer: WO 2012/097902

(56) Entgegenhaltungen:
- WO-A1-02/26538
- WO-A1-2009/121645
- WO-A1-2010/057730
- DE-A1- 10 238 278
- DE-A1-102006 014 836
- JP-A- 2007 284 007

## Beschreibung

Die Erfindung betrifft ein Bremssystem für ein Fahrzeug. Des Weiteren betrifft die Erfindung ein Verfahren zum Betreiben eines Bremssystems für ein Fahrzeug.

### Stand der Technik

In der DE 10 2004 025 638 A1 ist eine Bremsanlage für Kraftfahrzeuge beschrieben. Ein erster Kolben der Bremsanlage ist bei einer Betätigung des Bremspedals in eine von einem zweiten Kolben umfasste Innenkammer mit einem elastischen Element verstellbar. Ein Mitverstellen des zweiten Kolbens mit dem ersten Kolben bewirkt einen Druck auf einen dritten Kolben eines Hauptzylinders. Als Alternative zu dem direkten Einbremsen des Fahrzeugsführers in den Hauptbremszylinder mittels des über den zweiten Kolben auf den dritten Kolben übertragenen Drucks ist über ein hydraulisches Druckbereitstellungsmodul mit einem Druckmittelvorratsbehälter und einer ersten Pumpe zum Befüllen des Druckmittelvorratsbehälters ein Druck in einen Zwischenraum zwischen dem zweiten Kolben und dem dritten Kolben einspeisbar. Mittels des eingespeisten Drucks sollen der dritte Kolben zumindest teilweise in den Hauptbremszylinder und der zweite Kolben von dem Hauptbremszylinder weg verstellbar sein. An dem Hauptbremszylinder sind zwei Bremskreise mit jeweils einer zweiten und einer dritten Pumpe angeordnet. Die Bremsanlage weist deshalb einen ersten Pumpenmotor zum Betreiben der ersten Pumpe und einen zweiten Pumpenmotor zum Betreiben der zweiten Pumpe und der dritten Pumpe auf.

Die WO 2009/121645 A1 beschreibt ein Bremssystem, welches über ein Schließen eines Ventils aus einem Fahrereinbremsmodus in einen Fremdkraftbremsmodus steuerbar ist. Das Bremssystem der WO 2009/121645 A1hat einen ersten Kolben, welcher sowohl im Fahrereinbremsmodus als auch im Fremdkraftbremsmodus mittels einer Betätigung eines Bremspedals verstellbar ist. Der erste Kolben kontaktiert einen in einem Hauptbremszylinder angeordneten zweiten Kolben im Fahrereinbremsmodus und im Fremdkraftbremsmodus jeweils so, dass der zweite Kolben mittels des Verstellens des ersten Kolbens zumindest in eine die Schnüffelbohrungen abdeckende Stellung mitverstellbar ist. Da in dem Fremdkraftbremsmodus der in den Radbremszylindern aufzubauende Bremsdruck jedoch durch Pumpen von Bremsflüssigkeit mittels mindestens einer Pumpe aus einem Bremsmediumreservoir über die Kammern des Hauptbremszylinders in die Radbremszylinder bewirkt wird, benötigt das Bremssystem der WO 2009/121645 A1 ein weiteres Ventil, mittels welchem eine weitere hydraulische Verbindung zwischen dem Bremsmediumreservoir und dem Hauptbremszylinder freischaltbar ist.

Des Weiteren beschreibt die JP 2007 284007 A ein Bremssystem mit einem Vakuumbremskraftverstärker.

### Offenbarung der Erfindung

Die Erfindung schafft ein Bremssystem für ein Fahrzeug mit den Merkmalen des Anspruchs 1 und ein Verfahren zum Betreiben eines Bremssystems mit den Merkmalen des Anspruchs 12.

Da in dem als "Normalmodus" verwendbaren Fremdkraftbremsmodus die von dem Fahrer auf das Bremsbetätigungselement, beispielsweise auf ein Bremspedal, ausgeübte Kraft zum Aufbauen des Bremsdrucks in dem mindestens einem Radbremszylinder nicht benötigt wird, entfällt die Notwendigkeit einer Ausstattung des Bremssystems mit einem Bremskraftverstärker. Somit kann beispielsweise auf einen Bremskraftverstärker und eine Vakuumpumpe bei dem Bremssystem verzichtet werden. Dies verringert den Bauraumbedarf und die Kosten des Bremssystems.

Die vorliegende Erfindung gewährleistet ein Aufbauen eines Bremsdrucks in mindestens einem Radbremszylinder mittels der mindestens einen ersten Pumpe des mindestens einen ersten Bremskreises, welche ebenso als Rückförderpumpe verwendbar ist. Dies reduziert den Bauraumbedarf und die Kosten des Bremssystems zusätzlich.

Da der Fahrer im Fahrerbremsmodus, in welchem das Bremssystem in der Regel betreibbar ist, bei allen Systemfunktionen energetisch von der Betätigung der mindestens einen ersten Pumpe abgekoppelt ist, können kostengünstige Pumpentypen, wie z.B. Hubkolbenpumpen, für die mindestens eine erste Pumpe eingesetzt werden. Außerdem ist der Fahrer bei einem Einsetzen der mindestens einen ersten Pumpe als Rückförderpumpe oder als Bremsdruck-Ausbaupumpe von dem Hauptbremszylinder entkoppelt. Somit wird die Pumpenbetätigung im Antriebsstrang mit dem Bremsbetätigungselement von dem Fahrer nicht wahrgenommen. Damit ist ein vorteilhafter Komfort bei der Betätigung des Bremsbetätigungselements für den Fahrer auch bei Nichtvorliegen einer Gleichförmigkeit des Pumpenförderstroms gewährleistet. Im Gegensatz zu einem ESP-Hydroaggregat mit Vakuumbremsverstärker benötigt das hier beschriebene Bremssystem nur einen Pumpenmotor. Außerdem wird kein weiterer Elektromotor zusätzlich zu dem nur einen Pumpenmotor für die Bremskraftverstärkung benötigt.
Durch die Integration von Hydraulikaggregat und Betätigungseinheit ist die als Rückförderpumpe betätigbare mindestens eine erste Pumpe in einem vergleichsweise geringen Abstand zu dem Hauptbremszylinder und dem Bremsmediumreservoir (Vorratsbehälter) anordbar. Somit kann die Ansaugleitung zwischen der mindestens einer ersten Pumpe und dem Hauptbremszylinder mit einer vergleichsweise kurzen Ansaugleitungslänge ausgebildet werden. Dies ermöglicht eine hohe Druckaufbaudynamik, insbesondere bei niedrigen Temperaturen, ohne Zusatzkomponenten.
Wie unten genauer beschrieben wird, ist das Bremssystem mit einer einfachen Rohrführung (Rohr-System) mit insgesamt nur acht Verbindungsstellen (Verschraubungen) ausführbar. Dies gewährleistet eine einfach ausführbare und kostengünstige Montage des Bremssystems in einem Fahrzeug.
Zum Unterbinden eines Verstellens des zweiten Kolbens um den Mindestverstellweg trotz der auf den ersten Kolben übertragenen Fahrerbremskraft wird das kostengünstige erste Ventil verwendet.

Vorzugsweise umfasst das Bremssystem eine in der ersten Innenkammer angeordnete Simulatorfeder und ist die erste Innenkammer mit der darin angeordnete Simulatorfeder über ein zweites Ventil mit dem Bremsmediumreservoir so verbunden, dass in dem Fremdkraftmodus bei geöffnetem zweiten Ventil die auf den ersten Kolben übertragene Fahrerbremskraft so auf die Simulatorfeder übertragbar ist, dass die Simulatorfeder mittels der Fahrerbremskraft deformierbar ist.

Alternativ umfasst das Bremssystem vorzugsweise eine weitere Kolben-Zylinder-Einheit mit einer Vorkammer und einer mit einer Simulatorfeder ausgestatteten Simulatorkammer, wobei die erste Innenkammer über ein zweites Ventil mit der Vorkammer der weiteren Kolben-Zylinder-Einheit so verbunden ist, dass in dem Fremdkraftbremsmodus bei geöffnetem zweiten Ventil die auf den ersten Kolben übertragene Fahrerbremskraft so auf die Simulatorfeder übertragbar ist, dass die Simulatorfeder mittels der Fahrerbremskraft deformierbar ist.

Vorzugsweise gewährleistet die gemeinsame Verwendung des ersten Ventils und des zweiten Ventils eine einfache Betreibbarkeit des Bremssystems.
Vorzugsweise ist das erste Ventil ein stromlos offenes Ventil. Das zweite Ventil kann ein stromlos geschlossenes Ventil sein. In diesem Fall wird das Bremssystem bei einer Funktionsbeeinträchtigung des Fahrzeugbordnetzes automatisch in den Fahrereinbremsmodus und in den zweiten Simulationsmodus des Bremssystems gesteuert.

In einer vorteilhaften Ausführungsform umfasst das Bremssystem eine Steuervorrichtung, welche dazu ausgelegt ist, das Bremssystem zumindest aus dem Fahrereinbremsmodus in den Fremdkraftbremsmodus und aus dem Fremdkraftbremsmodus in den Fahrereinbremsmodus zu steuern, eine von einem Sensor bereitgestellte Betätigungsgröße bezüglich der Betätigung des Bremsbetätigungselements zu empfangen, ein in dem mindestens einen Radbremszylinder zu verschiebende Soll-Bremsmediumvolumen unter Berücksichtigung zumindest der empfangenen Betätigungsgröße festzulegen, und die mindestens eine erste Pumpe des in den Fremdkraftbremsmodus gesteuerten Bremssystems so anzusteuern, dass mittels der mindestens einen ersten Pumpe ein dem Soll-Bremsmediumvolumen entsprechendes Bremsmediumvolumen aus dem Bremsmediumreservoir über den Hauptbremszylinder in den mindestens einen ersten Radbremszylinder gepumpt wird. Dies gewährleistet ein Abbremsen des Fahrzeugs entsprechend einer von dem Fahrer vorgegebenen Soll-Fahrzeugverzögerung. In dem Fremdkraftbremsmodus kann das in dem mindestens einen ersten Radbremszylinder zu pumpende Soll-Bremsmediumvolumen zumindest unter Berücksichtigung einer Betätigungsgröße bezüglich der Betätigung des Bremsbetätigungselements durch den Fahrer, wie beispielsweise eine Bremsdrucks und/oder eines Bremswegs, festgelegt werden. Als Ergänzung kann die Steuervorrichtung dazu ausgelegt sein, das Soll-Bremsmediumvolumen unter zusätzlicher Berücksichtigung eines von einer rekuperativen Bremse, insbesondere eines Generators, auf mindestens ein Rad des Fahrzeugs ausgeübten rekuperativen Bremsmoments festzulegen. Mittels der Steuervorrichtung kann das rekuperative Bremsmoment somit auf einfache Weise verblendet werden, wobei die vom Fahrer vorgegebene Soll-Fahrzeugverzögerung einhaltbar ist.

Die Anwendbarkeit des hier beschriebenen Bremssystems ist jedoch nicht auf ein Elektro- oder Hybridfahrzeug begrenzt. Beispielsweise kann das in dem mindestens einen ersten Radbremszylinder zu verschiebende Bremsmediumvolumen auch unter Berücksichtigung einer von einem Fahrerassistenzsystem (z.B. ACC, Notbremssystem oder Einpark-Assistenzsystem) vorgegebenen Bremsgröße bezüglich eines Soll-Gesamtbremsmoments des Fahrzeugs festgelegt werden. Somit ist das hier beschriebene Bremssystem auch für ein Zusammenwirken mit einem Fahrerassistenzsystem, wie beispielsweise einem ACC-System, einem Notbremssystem oder einem Einpark-Assistenzsystem, besonders geeignet.

In einer vorteilhaften Weiterbildung ist das Bremssystem zusätzlich in einem Dynamischen-Brems-Modus steuerbar, in welchem die auf den ersten Kolben übertragene Fahrerbremskraft auf den zweiten Kolben zumindest teilweise so übertragbar ist, dass der zweite Kolben aus seiner Ausgangsstellung zumindest teilweise in die zweite Innenkammer des Hauptbremszylinders hineinverstellbar ist und mittels der mindestens einen ersten Pumpe oder mindestens einer weiteren Pumpe ein Zusatz-Bremsmediumvolumen aus mindestens einer Speicherkammer des mindestens einen Bremskreises in den mindestens einen ersten Radbremszylinder pumpbar ist. Auf diese Weise ist das Fahrzeug schneller abbremsbar, insbesondere schneller in den Stillstand überführbar. Das Steuern des Bremssystems in den Dynamischen-Brems-Modus kann unter Berücksichtigung eines Bremswegs, einer Bremswegänderung, einer Bremskraft, einer Bremskraftänderung, einer Umgebungssituation und/oder einer Fahrzeugkomponenten-Situation erfolgen. Somit kann das Fahrzeug insbesondere bei einer starken Betätigung des Bremsbetätigungselements, bei einer plötzlichen Betätigung des Bremsbetätigungselements, bei einer Funktionsbeeinträchtigung einer Fahrzeugkomponente und/oder in einer ein schnelles Abbremsen des Fahrzeugs nahelegenden Verkehrssituation verlässlich in einer vergleichsweise kurzen Zeit abgebremst werden.

Vorteilhafterweise ist eine Ansaugleitungsweglänge von einer Ansaugseite der ersten Pumpe zu dem Hauptbremszylinder kleiner als 25 cm, vorzugsweise kleiner als 20 cm, insbesondere kleiner als 15 cm. Die Ansaugleitungsweglänge kann bevorzugter Weise kleiner als 10 cm sein. Auf diese Weise ist eine hohe Druckaufbaudynamik realisierbar.

In einer vorteilhaften Ausführungsform ist die erste Innenkammer der Betätigungselement-Ankopplungs-Einrichtung über das erste Ventil mit der ersten Druckkammer des Hauptbremszylinders verbunden, wobei der zweite Kolben des Hauptbremszylinders die zweite Innenkammer und die erste Druckkammer begrenzt. Somit kann mittels der über das geöffnete erste Ventil realisierten hydraulischen Verbindung die Fahrerbremskraft auf den zweiten Kolben verlässlich übertragen werden.

In einer weiteren vorteilhaften Ausführungsform umfasst die Betätigungselement-Ankopplungs-Einrichtung den die erste Innenkammer und die zweite Druckkammer begrenzenden verschiebbaren Innenkolben, welcher sich über die Simulatorfeder von dem ersten Kolben abstützt, wobei der zweite Kolben des Hauptbremszylinders die erste Innenkammer und die erste Druckkammer begrenzt und derart an dem Innenkolben angeordnet ist, dass die auf dem ersten Kolben übertragene Fahrerbremskraft zumindest teilweise über den Innenkolben auf den zweiten Kolben übertragbar ist, und wobei die zweite Druckkammer über das erste Ventil mit der ersten Druckkammer verbunden ist. Ein Schließen des ersten Ventils unterbindet somit eine Volumenvergrößerung der von dem zweiten Kolben begrenzten Vorkammer und unterbindet somit ein Verstellen des zweiten Kolbens um den Mindestweg verlässlich.

Vorteilhafterweise umfasst das Bremssystem mindestens einen an dem Hauptbremszylinder angeordneten zweiten Bremskreis mit mindestens einem zweiten Radbremszylinder und mindestens einer zweiten Pumpe, wobei das Bremssystem genau einen Pumpenmotor aufweist, an dessen Welle die mindestens zwei Pumpen des Bremssystems angeordnet sind. Im Gegensatz zum Stand der Technik benötigt das hier beschriebene Bremssystem somit trotz der kraft- und arbeitsmäßigen Entlastung des Fahrers beim Abbremsen des in den Fremdkraftbremsmodus gesteuerten Bremssystems nur einen Motor und keinen weiteren Bremsverstärker-Motor. Dies reduziert den Bauraumbedarf und die Kosten für das Bremssystem.

Die in den oberen Absätzen beschriebenen Vorteile sind auch bei einem entsprechenden Verfahren zum Betreiben eines Bremssystems für ein Fahrzeug gewährleistet.

### Kurze Beschreibung der Zeichnungen

Weitere Merkmale und Vorteile der vorliegenden Erfindung werden nachfolgend anhand der Figuren erläutert.

Es zeigen:
- Fig. 1: eine schematische Darstellung einer ersten Ausführungsform des Bremssystems;
- Fig. 2: eine schematische Teildarstellung einer zweiten Ausführungsform des Bremssystems;
- Fig. 3: eine schematische Teildarstellung einer dritten Ausführungsform des Bremssystems;
- Fig. 4: eine schematische Teildarstellung einer vierten Ausführungsform des Bremssystems; und
- Fig. 5: eine schematische Darstellung einer fünften Ausführungsform des Bremssystems.

### Ausführungsformen der Erfindung

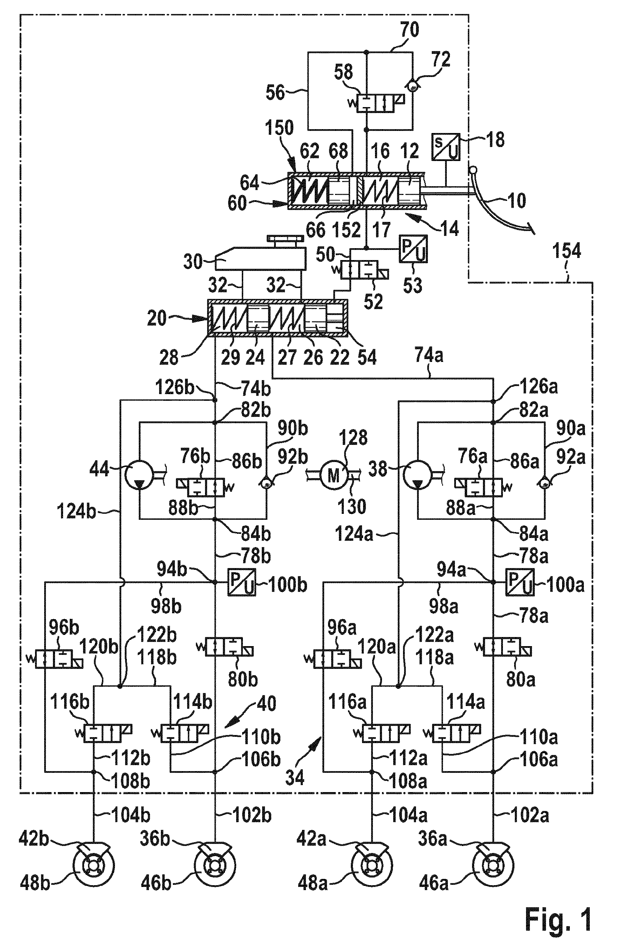

Fig. 1 zeigt eine schematische Darstellung einer ersten Ausführungsform des Bremssystems.

Das in einem Fahrzeug einsetzbare Bremssystem der Fig. 1 weist ein Bremsbetätigungselement 10 auf, welches beispielsweise als Bremspedal ausgebildet ist. Anstelle oder als Ergänzung zu einem als Bremspedal ausgebildeten Bremsbetätigungselement 10 kann das Bremssystem jedoch auch eine andere Ausführungsform eines für einen Fahrer betätigbaren Betätigungselements zum Abbremsen des Fahrzeugs aufweisen.

Ein erster Kolben 12 einer Betätigungselement-Ankopplungs-Einrichtung 14 ist derart an dem Bremsbetätigungselement 10 angeordnet, dass der erste Kolben 12 mittels einer Betätigung des Bremsbetätigungselements 10 zumindest teilweise in eine erste Innenkammer 16 der Betätigungselement-Ankopplungs-Einrichtung 14 hinein verstellbar ist. Mittels einer in der ersten Innenkammer angeordnete Rückstellfeder 17 ist gewährleistbar, dass der erste Kolben 12 bei einer Nichtbetätigung des Bremsbetätigungselements 10 in seiner Ausgangsstellung vorliegt.

Optionalerweise ist ein Sensor 18 so an dem Bremsbetätigungselement 10 und/oder an dem ersten Kolben 12 angeordnet, dass mittels des Sensors 18 ein Betätigungsweg des Bremsbetätigungselements 10 und/oder des ersten Kolbens 12 und/oder eine auf das Bremsbetätigungselement 10 und/oder auf den ersten Kolben 12 aufgebrachte Kraft ermittelbar ist. In einer bevorzugten Ausführungsform ist der Sensor 18 als Bremskraftsensor und/oder Bremswegsensor ausgebildet. Das Bremssystem ist jedoch nicht auf die Anbringung eines derartigen Sensors 18 limitiert. Beispielsweise kann mittels eines als Drucksensor ausgebildeten Sensors 18 auch ein Druck im ersten Innenraum 16 als Ersatzgröße für die Pedalkraft ermittelt werden.

Das Bremssystem weist auch einen Hauptbremszylinder 20 mit einem zweiten Kolben 22, z.B. einem Schwimmkolben, auf. Der Hauptbremszylinder 20 kann insbesondere als Tandemhauptbremszylinder ausgebildet sein. In diesem Fall ist ein weiterer Kolben 24 derart mit dem zweiten Kolben 22 verbunden, dass der weitere Kolben 24 mit dem zweiten Kolben 22 mitverstellbar ist. Anstelle eines Tandemhauptbremszylinders kann das Bremssystem auch einen anderen Typ des Hauptbremszylinders 20 aufweisen.

Das Bremssystem ist in einem Fahrereinbremsmodus betreibbar, in welchem eine auf den ersten Kolben 12 übertragene Fahrerbremskraft zumindest teilweise so auf den zweiten Kolben 22 übertragbar ist, dass der zweite Kolben 22 aus seiner Ausgangsstellung zumindest teilweise in eine zweite Innenkammer 26 des Hauptbremszylinders 20 hineinverstellbar ist. Sofern der Hauptbremszylinder 20 ein Tandemhauptbremszylinder ist, kann der mit dem zweiten Kolben 22 mitverstellbare weitere Kolben 24 aus dessen Ausgangsstellung in eine weitere Innenkammer 28 des Hauptbremszylinders 20 zumindest teilweise hineinverstellbar sein. Unter der jeweiligen Ausgangsstellung kann eine Stellung des zweiten Kolbens 22 und/oder des weiteren Kolbens 24 verstanden werden, in welcher diese bei einer Nichtbetätigung des Bremsbetätigungselements 10 durch den Fahrer vorliegen. Mittels der Rückstellfedern 27 und 29 ist dies auf einfache Weise gewährleistbar.

Ein als Vorratsbehälter bezeichenbares Bremsmediumreservoir 30 ist bei einem Vorliegen des zweiten Kolbens 22 (und des weiteren Kolbens 24) in der Ausgangsstellung mit der zweiten Innenkammer 26 (und der weiteren Innenkammer 28) hydraulisch verbunden. Darunter kann verstanden werden, dass bei Vorliegen des zweiten Kolbens 22 (und des weiteren Kolbens 24) in der Ausgangsstellung ein Bremsmediumaustausch zwischen dem Bremsmediumreservoir 30 und der zweiten Innenkammer 26 (und der weiteren Innenkammer 28) über die hydraulische Verbindung gewährleistet ist. Die hydraulische Verbindung zwischen dem Bremsmediumreservoir 30 und der zweiten Innenkammer 26, ggf. zwischen dem Bremsmediumreservoir 30 und der weiteren Innenkammer 28, wird bei einem Verstellen des zweiten Kolbens 22, bzw. des weiteren Kolbens 24, um einen Mindestverstellweg unterbunden. Unter diesem Unterbinden kann ein Abdichten und/oder Schließen verstanden werden. Dies ist beispielsweise über eine Realisierung der hydraulischen Verbindung zwischen dem Hauptbremszylinder 20 und dem Bremsmediumreservoir 30 über mindestens eine Schnüffelbohrung 32 auf einfache Weise realisierbar.

Das Bremssystem weist mindestens einen an dem Hauptbremszylinder 20 angeordneten ersten Bremskreis 34 mit mindestens einem ersten Radbremszylinder 36a und 42a und mindestens einer ersten Pumpe 38 auf. Optionalerweise hat das Bremssystem noch mindestens einen an dem Hauptbremszylinder 20 angeordneten zweiten Bremskreis 40 mit mindestens einem zweiten Radbremszylinder 36b und 42b und mindestens einer zweiten Pumpe 44. Das Bremssystem ist jedoch nicht auf eine Ausstattung mit zwei Bremskreisen 34 und 40 beschränkt.

Mittels je eines Radbremszylinders 36a, 36b, 42a und 42b kann jeweils ein Rad 46a, 46b, 48a und 48b des Fahrzeugs abbremsbar sein. Beispielsweise können die dem ersten Bremskreis 34 zugeordneten Räder 46a und 48a als linkes Vorderrad und als rechtes Hinterrad am Fahrzeug angeordnet sein, während die dem zweiten Bremskreis 40 zugeordneten Räder 46b und 48b als rechtes Vorderrad und linkes Hinterrad dienen. Das hier beschriebene Bremssystem ist jedoch nicht auf eine X-Bremskreisaufteilung beschränkt. Stattdessen können die einem Bremskreis 34 oder 40 zugeordneten Räder auch an einer gemeinsamen Achse (als Vorderräder oder als Hinterräder) angeordnet sein. Ebenso können die einem Bremskreis 34 oder 40 zugeordneten Räder auf einer Seite des Fahrzeugs angeordnet sein. Das hier beschriebene Bremssystem ist auch nicht auf eine Anwendung in einem Fahrzeug mit genau vier Rädern 46a, 46b, 48a und 48b limitiert.

In dem Fahrereinbremsmodus kann der Fahrer mittels eines aus der Betätigung des Bremsbetätigungselements 10 resultierenden Druckaufbaus in dem Hauptbremszylinder 20 direkt in mindestens einen Radbremszylinders 36a, 36b, 42a und 42b hineinbremsen. Zusätzlich ist das Bremssystem aus dem Fahrereinbremsmodus zumindest in einem Fremdkraftbremsmodus steuerbar. In dem Fremdkraftbremsmodus ist ein Verstellen des zweiten Kolbens 22 (und des weiteren Kolbens 24) um den Mindestverstellweg trotz der auf den ersten Kolben 12 übertragenen Fahrerbremskraft unterbunden. Man kann dies auch so umschreiben, dass auch bei einer Betätigung des Bremsbetätigungselements 10, über welche der erste Kolben 12 aus seiner Ausgangsstellung verstellt wird, ein Mitverstellen des zweiten Kolbens 22 (und des weiteren Kolbens 24) aus seiner Ausgangsstellung um einen Verstellweg von zumindest dem Mindestverstellweg unterbunden ist. Somit ist bei einem Steuern des Bremssystems in den Fremdkraftbremsmodus gewährleistet, dass die hydraulische Verbindung zwischen dem Bremsmediumreservoir 30 und dem Hauptbremszylinder 20 trotz einer Betätigung des Bremsbetätigungselements 10 und einem Mitverstellen des ersten Kolbens 12 zumindest teilgeöffnet, vorzugsweise offen, vorliegt. Des Weiteren ist der mindestens eine Bremskreis 34 und 40 des Bremssystems so ausgelegt, dass mittels seiner mindestens einen Pumpe 38 und 44 ein Bremsmediumvolumen auf dem Bremsmediumreservoir 30 über den Hauptbremszylinder 20 in den mindestens einen Radbremszylinder 36a, 36b, 42a und 42b pumpbar ist. Das Bremssystem kann mit zwei gleich ausgebildeten Bremskreisen 34 und 40 einen vergleichsweise einfachen Aufbau aufweisen. Die Ausbildbarkeit des Bremssystems ist jedoch nicht auf eine analoge Ausbildung der beiden Bremskreise 34 und 40 beschränkt.

Nach einem Steuern des Bremssystems in den Fremdkraftbremsmodus ist der in dem mindestens einen Radbremszylinder 36a, 36b, 42a und 42b vorliegende Bremsdruck somit aufbaubar/einstellbar, ohne dass dazu eine von dem Fahrer auf das Bremsbetätigungselement 10 ausgeübte Kraft verbraucht wird. In dem Fremdkraftbremsmodus ist eine Relation zwischen der auf das Bremsbetätigungselement 10 ausgeübten Bremkraft/dem Bremsweg und dem in dem mindestens einen Radbremszylinder 36a, 36b, 42a und 42b aufgebauten Bremsdruck somit über eine Ansteuerung der mindestens einen Pumpe 38 und 44 frei vorgebbar. Somit kann in dem Fremdkraftbremsmodus eine Relation zwischen der auf das Bremsbetätigungselement 10 ausgeübten Bremskraft/dem Bremsweg und dem aufgebauten Bremsdruck realisiert werden, bei welcher bereits eine verhältnismäßig kleine Bremskraft/ein verhältnismäßig kleiner Bremsweg einen relativ hohe Bremsdruck bewirkt. Das Abbremsen des Fahrzeugs mittels des in den Fremdkraftbremsmodus gesteuerten Bremssystems ist für den Fahrer damit komfortabel und ohne einen großen Kraftaufwand ausführbar. Insbesondere kann das Bremssystem so betrieben werden, dass der Fremdkraftbremsmodus als "Normalmodus" vorliegt. In diesem Fall benötigt das Bremssystem keinen Bremskraftverstärker, mit welchem herkömmlicher Weise eine Unterstützungskraft zusätzlich zu der Fahrerbremskraft auf den Hauptbremszylinder-Kolben ausgeübt wird, um den Fahrer beim Abbremsen des Fahrzeugs kraftmäßig zu entlasten. Somit entfällt auch die Notwendigkeit eines Bremskraft-Verstärkermotors, einer motorisierten Pumpe zum Befüllen eines Druckmittelvorratsbehälters und/oder eines hydraulischen Druckbereitstellungsmoduls. Stattdessen kann die arbeits- und kraftmäßige Entlastung des Fahrers bereits mittels einer auch als Rückförderpumpe verwendbaren Pumpe 38 und 44 realisiert werden. Es wird hier auch darauf hingewiesen, dass die für den Fahrer vorteilhafte Relation zwischen der auf das Bremsbetätigungselement 10 ausgeübten Bremkraft/dem Bremsweg und dem in dem mindestens einen Radbremszylinder 36a, 36b, 42a und 42b aufgebauten Bremsdruck lediglich eine entsprechende Programmierung einer kostengünstigen Elektronik erfordert.

Nachfolgend wird ein erstes Ausführungsbeispiel zum Realisieren des vorteilhaften Unterbindens eines Mitverstellens des zweiten Kolbens 22 (und des weiteren Kolbens 24) mit dem ersten Kolben 12 beschrieben: Bei dem Bremssystem der Fig. 1 ist die erste Innenkammer 16 über eine Leitung 50 mit einem darin eingesetzten ersten Ventil 52 mit einer ersten Druckkammer 54 des Hauptbremszylinders 20 verbunden. Dabei begrenzt der zweite Kolben 22 die erste Druckkammer 54 und die zweite Innenkammer 26 derart, dass ein Verschieben des zweiten Kolbens 22 zur Volumenvergrößerung der ersten Druckkammer die zweite Innenkammer 26 verkleinert, während ein entgegen gerichtetes Verstellen des zweiten Kolbens 22 zur Volumenvergrößerung der zweiten Innenkammer 26 die erste Druckkammer 54 verkleinert. Somit ist mittels eines Schließens des ersten Ventils 52 eine Volumenverschiebung aus der ersten Innenkammer 16 in die erste Druckkammer 54 trotz eines Hineinverstellens des ersten Kolbens 12 unterbindbar, wodurch eine Volumenzunahme der ersten Druckkammer 54 und damit auch ein zumindest teilweises Hineinverstellen des zweiten Kolbens (um den Mindestverstellweg) in die zweite Innenkammer 26 verhindert ist. Das Bremssystem ist deshalb mittels eines Schließens des ersten Ventils 52 aus dem Fahrereinbremsmodus in den Fremdkraftbremsmodus steuerbar. Nach einem zumindest teilweise Öffnen des ersten Ventils 52 ist eine Volumenverschiebung aus der ersten Innenkammer 16 in die erste Druckkammer 54 und damit ein Verstellen des zweiten Kolbens 22 um zumindest den Mindestbremsweg wieder gewährleistet, weshalb das Bremssystem mittels eines zumindest teilweise Öffnens des ersten Ventils 52 aus dem Fremdkraftbremsmodus in den Fahrereinbremsmodus steuerbar ist. Als Ergänzung kann das Bremssystem einen zwischen der ersten Innenkammer 16 und dem ersten Ventil 52 angeordneten Drucksensor 53 aufweisen, mittels welchem der Druck in der ersten Innenkammer 16 indirekt ermittelbar ist.

Optionalerweise umfasst das Bremssystem auch eine Betätigungselement-Ankopplungs-Einrichtung (mit einer Simulatorfeder 64), auf welche in einem ersten Simulationsmodus die auf den ersten Kolben übertragene Fahrerbremskraft so übertragbar ist, dass die Simulatorfeder 64 mittels der Fahrerbremskraft deformierbar ist, wobei das Bremssystem aus dem ersten Simulationsmodus in einen zweiten Simulationsmodus steuerbar ist, in welchem der erste Kolben 12 bei Vorliegen der Simulatorfeder 64 in ihrer ausgestreckten Stellung zumindest teilweise in die erste Innenkammer 16 hineinverstellbar verstellbar ist.

Bei dem Bremssystem der Fig. 1 ist dies gewährleistet, indem die erste Innenkammer 16 über eine Leitung 56 mit einem darin angeordneten zweiten Ventil 58 auch mit einer weiteren Kolben-Zylinder-Einheit 60 verbunden. Die weitere Kolben-Zylinder-Einheit 60 umfasst eine Simulatorkammer 62 mit der Simulatorfeder 64, eine Vorkammer 66 und einen zwischen der Simulatorkammer 62 und der Vorkammer 66 verschiebbar angeordneten Zwischenkolben 68. Der Zwischenkolben 68 begrenzt die Simulatorkammer 64 und die Vorkammer 66 derart, dass eine Volumenzunahme der Vorkammer 66 eine entsprechende Volumenabnahme der Simulatorkammer 62 und eine Volumenabnahme der Vorkammer 66 eine entsprechende Volumenzunahme der Simulatorkammer 62 aufgrund eines korrespondierenden Verschiebens des Zwischenkolbens 68 bewirken. Der Volumenabnahme der Simulatorkammer 62, bzw. der entsprechenden Verstellbewegung des Zwischenkolbens 68, wirkt die Simulatorfeder 64 entgegen.

Optionalerweise verläuft eine Bypassleitung 70 mit einem Rückschlagventil 72 parallel zu dem zweiten Ventil 58. Durch die Anordnung des Rückschlagventils 72 kann eine Volumenverschiebung aus der ersten Innenkammer 16 über die Bypassleitung 70 in die Vorkammer 66 unterbunden werden.

Die Leitung 56 mündet in der Vorkammer 66. Sofern das zweite Ventil 58 zumindest teilweise geöffnet ist, ist somit eine Bremsmediumverschiebung aus der ersten Innenkammer 16 über die Leitung 56 in die Vorkammer 66 möglich, wodurch eine Volumenzunahme der Vorkammer 66 unter entsprechender Volumenabnahme der Simulatorkammer 62 auftritt. Über die Simulatorfeder 64 ist somit eine weitere Gegenkraft (Simulatorkraft) zusätzlich zu der Rückstellkraft der Rückstellfeder 17 auf den aus seiner Ausgangsstellung verstellten ersten Kolben 12 ausübbar, sofern das zweite Ventil 58 zumindest teilweise geöffnet ist. Man kann dies auch als ein Steuern in den ersten Simulationsmodus durch zumindest Teilöffnen des zweiten Ventils umschreiben. Über ein Schließen des zweiten Ventils 58 ist das Bremssystem entsprechend aus dem ersten Simulationsmodus in den zweiten Simulationsmodus steuerbar, in welchem eine Bremsmediumverschiebung aus der ersten Innenkammer 16 in die Vorkammer 66 unterbunden ist, und somit der erste Kolben 12 in die erste Innenkammer 16 verschiebbar ist, ohne dass die Simulatorfeder 64 deformiert wird. Damit wirkt der Verstellbewegung des ersten Kolbens 12 aus seiner Ausgangsstellung heraus auch keine durch eine Deformierung der Simulatorfeder 64 bewirkte Simulatorkraft entgegen.

Auf diese Weise kann mittels eines Öffnens des zweiten Ventils 58 nach einem Schließen des ersten Ventils 52 sichergestellt werden, dass der Fahrer trotz der Abkopplung des Hauptbremszylinders 20 aufgrund der zusätzlich auf das Bremsbetätigungselement 10 ausgeübten Simulatorkraft noch ein vorteilhaftes (standardgemäßes) Pedalgefühl hat. Zusätzlich ist mittels eines Schließens des zweiten Ventils 58 gewährleistbar, dass im Fahrereinbremsmodus der Verstellbewegung des ersten Kolbens 12 in die erste Innenkammer 16 hinein keine Simulatorkraft entgegenwirkt, und somit die von dem Fahrer auf das Bremsbetätigungselement 10 aufgebrachte Kraft (nahezu) ausschließlich zum Einbremsen in den Hauptbremszylinder 20 für einen Druckaufbau in dem mindestens
einen Radbremszylinder 36a, 36b, 42a und 42b verwendet werden kann. Der Fahrer hat somit trotz des vorteilhaften (standardgemäßen) Bremsgefühls während des Fremdkraftbremsmodus nach einem Steuern des Bremssystems in den Fahrereinbremsmodus noch die Möglichkeit, schnell und mit einer vergleichsweise geringen Kraft so in den Hauptbremszylinder 20 einzubremsen, dass in dem mindestens einen Radbremszylinder 36a, 36b, 42a und 42b ein ausreichender Bremsdruck aufgebaut wird.
Bevorzugter Weise ist das erste Ventil 52 ein stromlos offenes Ventil. Somit wird das Bremssystem bei einer Funktionsbeeinträchtigung des Bordnetzes des Fahrzeugs automatisch in den Fahrereinbremsmodus gesteuert. Auch eine Ausbildung des zweiten Ventils 58 als stromlos geschlossenes Ventil ist vorteilhaft, da in diesem Fall bei der Funktionsbeeinträchtigung des Bordnetzes die dem Hineinverstellen des ersten Kolbens 12 in die erste Innenkammer 16 entgegenwirkende Simulatorkraft unterbunden ist.
Nachfolgend wird eine vorteilhafte Ausbildung der zwei gleich ausgebildeten Bremskreise 34 und 40 beschrieben, auf welche das Bremssystem jedoch nicht limitiert ist:
Jeder der Bremskreise 34 und 40 ist bei der dargestellten Ausführungsform über eine Ansaugleitung 74a oder 74b mit dem Hauptbremszylinder 20 verbunden sein. Die Ansaugleitung 74a und 74b kann zu einer Ansaugseite jeweils einer Pumpe 38 oder 44 führen. Eine Ansaugleitungsweglänge von der Ansaugseite der jeweiligen Pumpe 38 und 44 zu dem Hauptbremszylinder kann kleiner als 25 cm, vorzugsweise kleiner als 20 cm, insbesondere kleiner als 15 cm sein. Bevorzugter Weise ist die Ansaugleitungsweglänge von der Ansaugseite der jeweiligen Pumpe 38 und 44 zu dem Hauptbremszylinder 20 kleiner als 10 cm. Dies bewirkt eine vorteilhafte Druckaufbaudynamik. Durch die geringe Distanz der Pumpen 38 und 44 von dem Hauptbremszylinder sind außerdem Saugverluste, insbesondere bei tiefen Temperaturen, reduzierbar.

Die Pumpen 38 und 44 sind über jeweils eine Leitung 78a und 78b mit je einem Radeinlassventil 80a und 80b verbunden. Über je einen Verzweigungspunkt 82a oder 82b in der Ansaugleitung 74a oder 74b und je einen Verzweigungspunkt 84a oder 84b in der Leitung 78a und 78b sind jeweils eine Leitung 86a oder 86b, ein daran angeordnetes Umschaltventil 76a oder 76b und eine von dem Umschaltventil 76a oder 76b wegführende weitere Leitung 88a oder 88b parallel zu der Pumpe 38 oder der Pumpe 44 geführt. Auch eine Bypassleitung 90a oder 90b mit einem Rückschlagventil 92a oder 92b verläuft zwischen den Verzweigungspunkten 82a und 84a oder 82b und 84b, wobei aufgrund der Ausrichtung der Rückschlagventile 92a und 92b eine Bremsmediumverschiebung von der jeweiligen Leitung 78a oder 78b über die Bypassleitung 90a oder 90b zu der Ansaugleitung 74a oder 74b unterbunden ist.

Über jeweils einen in der Leitung 78a und 78b ausgebildeten Verzweigungspunkt 94a oder 94b sind auch zu jeweils einem weiteren Radeinlassventil 96a oder 96b führende Leitungen 98a oder 98b und jeweils ein Drucksensor 100a und 100b angeschlossen. Jedes der Radeinlassventile 80a, 80b, 96a und 96b ist über jeweils eine Leitung 102a, 102b, 104a und 104b mit einem zugeordneten Radbremszylinder 36a, 36b, 42a und 42b verbunden. In jeder der Leitungen 102a, 102b, 104a und 104b ist jeweils ein Verzweigungspunkt 106a, 106b, 108a und 108b ausgebildet, von welchem eine Leitung 110a, 110b, 112a oder 112b zu einem Radauslassventil 114a, 114b, 116a und 116b führt. Von zwei Radauslassventilen 114a, 114b, 116a und 116b eines Bremskreises 34 und 40 verläuft je eine Leitung 118a, 118b, 120a und 120b zu einem Bremskreis-internen Verzweigungspunkt 122a oder 122b. Von jedem der Verzweigungspunkte 122a und 122b führt jeweils eine Leitung 124a oder 124b zu einem in der zugehörigen Ansaugleitung 74a oder 74b ausgebildeten Verzweigungspunkt 126a oder 126b.

Die Bremskreise 34 und 40 weisen eine vergleichsweise geringe Anzahl von Rohrleitungsverbindungen auf. Außerdem sind die Bremskreise 34 und 40 so ausgebildet, dass die Pumpen 38 und 44 sowohl zum Aufbauen des Bremsdrucks in den Radbremszylindern 36a, 36b, 42a und 42b als auch als Rückförderpumpen einsetzbar sind. Durch diese Multifunktionalität der Pumpen 38 und 44 sind der Bauraumbedarf und die Kosten für das Bremssystem reduzierbar.

Das Bremssystem weist genau einen Pumpenmotor 128 auf, an dessen Welle 130 die Pumpen 38 und 44 angeordnet sind. Gegenüber einem herkömmlichen Bremssystem bietet das hier beschriebene Bremssystem somit den Vorteil, dass lediglich ein Pumpenmotor 128 zum Betreiben der Rückförderpumpen und zum aktiven Aufbauen eines Bremsmoments in den Radbremszylindern 36a, 36b, 42a und 42b benötigt wird. Außerdem ist die erforderliche Leistung des Pumpenmotors 128 aufgrund der vorteilhaften gering beabstandeten Anordnung der Pumpen 38 und 44 von dem Hauptbremszylinder 20 reduzierbar, ohne dass dazu ein langsameres Abbremsen des Fahrzeugs in Kauf genommen werden muss.

Für eine weitere Reduzierung des vom dem Bremssystem eingenommenen Bauraums und/oder zur Vereinfachung der Montage des Bremssystems können die Betätigungselement-Ankopplungs-Einrichtung 14 und die Kolben-Zylinder-Einheit 60 in einem gemeinsamen Gehäuse 150/in einer gemeinsamen Bohrung angeordnet sein. Man kann dies auch als parallele Anordnung von Bremselement-Ankopplung und Hauptbremszylinder 20 umschreiben. Beispielsweise kann sich die Rückstellfeder 17 zwischen dem ersten Kolben 12 und einer festen Wand 152 abstützen, welche die erste Innenkammer von der Vorkammer 66 flüssigkeitsdicht abtrennt.

In einer bevorzugten Ausführungsform sind bis auf die Radbremszylinder 36a, 36b, 42a und 42b alle hydraulischen Elemente zusammen mit dem Bremsbetätigungselement 10 in einer (integrierten) Hydraulikeinheit 154 zusammengefasst. Vorteilhafterweise ist die (integrierte) Hydraulikeinheit 154 an einer Trennwand zwischen Fahrgastinnenraum und Motorraum (Spritzwand) montiert (in Fig. 1 nicht dargestellt).

Es wird darauf hingewiesen, dass das Bremssystem Fig. 1 bis auf das Bremsmediumreservoir 30 keine Speicherkammern benötigt, da das System bei allen Regelfunktionen im Fremdkraftbremsmodus (Betriebsbremsung mit Bremskraftverstärkung, ABS, ASR, ESP) ohne einen Druck im Hauptbremszylinder 20 arbeitet und der Druck in den Radbremszylindern 36a, 36b, 42a und 42b damit auf den Umgebungsdruck absenkbar ist. Beim Abbau des in den Radbremszylindern 36a, 36b, 42a und 42b aufgebauten Bremsdrucks strömt das Bremsmediumvolumen damit automatisch über den Hauptbremszylinder 20 in das Bremsmediumreservoir 30 zurück. Das ohne einen aufwändigen Druckspeicher arbeitende Bremssystem weist ein hydraulisches Back-up auf.

Optionalerweise weist das Bremssystem auch eine (nicht dargestellte) Steuervorrichtung auf, welche zusätzlich zu einem Ansteuern der Ventile 52 und 58 auch dazu ausgelegt ist, eine Betätigungsgröße bezüglich der Betätigung des Bremsbetätigungselements, welche beispielsweise von dem Sensor 18 ermittelt wird, zu empfangen und unter Berücksichtigung zumindest der Betätigungsgröße ein in dem mindestens einen Radbremszylinder 36a, 36b, 42a und 42b zu verschiebendes Soll-Bremsmediumvolumen festzulegen. Ebenso kann die Steuervorrichtung dazu ausgelegt sein, mindestens eine Pumpe 38 und/oder 44 des in dem Fremdkraftbremsmodus gesteuerten Bremssystems so anzusteuern, dass mittels der mindestens einen Pumpe 38 oder 44 ein dem Soll-Bremsmediumvolumen entsprechendes Bremsmediumvolumen aus dem Bremsmediumreservoir 30 über den Hauptbremszylinder 20 in den mindestens einen Radbremszylinder 36a, 36b, 42a und 42b gepumpt wird. Als Ergänzung dazu kann bei der Festlegung des Soll-Bremsmediumvolumens auch ein rekuperatives Bremsmoment einer (nicht dargestellten) rekuperativen Bremse und/oder ein Soll-Bremsmoment eines Fahrerassistenzsystems berücksichtigt werden. Ebenso kann beim Ansteuern der mindestens einen Pumpe 38 oder 44 mindestens ein Sensorsignal des mindestens einen Drucksensors 100a und 100b berücksichtigt werden. Auch den Radbremszylindern 36a, 36b, 42a und 42b können von der Steuervorrichtung ausgewertete Drucksensoren angeordnet werden, um hochwertige Regel- und Sicherheitsalgorithmen implementieren zu können. Der Bremsdruck kann in diesem Fall auch während der Betriebsbremsfunktion stets Rad-individuell geregelt werden. Auf diese Weise ist ein Schiefziehen des Fahrzeugs vermeidbar und eine optimale Bremskraftverteilung gewährleistbar. Außerdem lässt sich dadurch ein Eigenlenkverhalten beeinflussen.

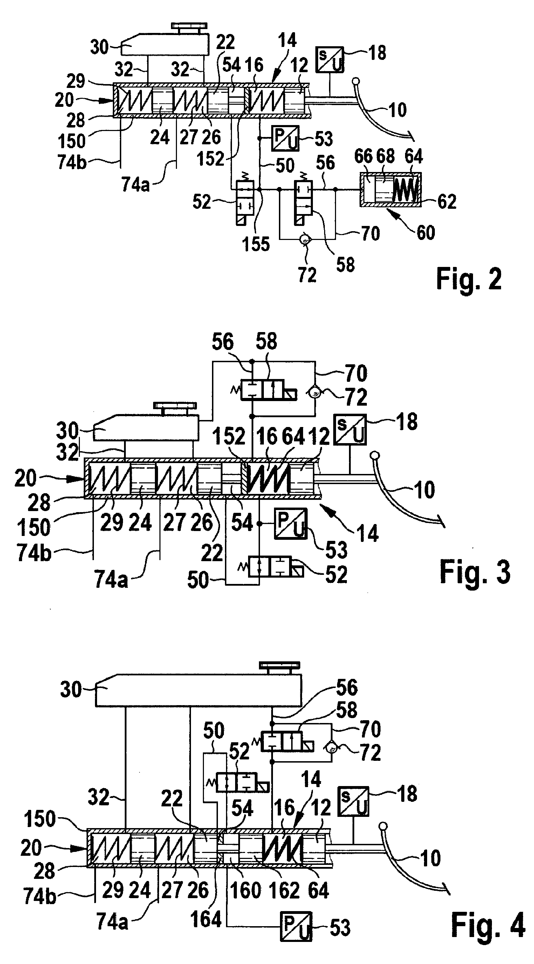

Fig. 2 zeigt eine schematische Teildarstellung einer zweiten Ausführungsform des Bremssystems.

Bei dem in Fig. 2 schematisch (teilweise) wiedergegebenen Bremssystems sind die Betätigungselement-Ankopplungs-Einrichtung 14 und der Hauptbremszylinder 20 in einem gemeinsamen Gehäuse 150 über eine feste Wand 152 getrennt angeordnet. Man kann dies als eine Ausbildung der Pedalankopplung und des Hauptbremszylinders 20 in einer gemeinsamen Bohrung bezeichnen. Die Kolben-Zylinder-Einheit 60 ist separiert von dem Gehäuse 150/außerhalb der gemeinsamen Bohrung angeordnet. Durch die Anbindung der Leitung 56 mit dem zweiten Ventil 58 an die Leitung 50, beispielsweise über einen zwischen dem ersten Ventil 52 und der ersten Innenkammer 16 angeordneten Verzweigungspunkt 155, ist ein Aktivieren und Deaktivieren der auf das Bremsbetätigungselement ausübbaren Simulatorkraft verlässlich gewährleistet.

Das Bremssystem der Fig. 2 kann zusätzlich die oben schon beschriebenen Bremskreise 34 und 40 aufweisen, auf deren erneute Beschreibung verzichtet wird.

Fig. 3 zeigt eine schematische Teildarstellung einer dritten Ausführungsform des Bremssystems.

Bei dem in Fig. 3 teilweise schematisch wiedergegebenen Bremssystem ist die Simulatorfeder 64 (anstelle der Rückstellfeder) in der ersten Innenkammer 16 angeordnet. Die erste Innenkammer 16 ist über die Leitung 56 mit dem darin eingesetzten zweiten Ventil 58 mit dem Bremsmediumreservoir 30 verbunden. Sofern das zweite Ventil 58 in einen zumindest teilgeöffneten Zustand gesteuert ist, kann deshalb der erste Kolben 12 entgegen der Simulatorkraft auch bei einem geschlossenen ersten Ventil 52 verstellt werden.

Bei dieser Ausführungsform ist die Betätigungselement-Ankopplungs-Einrichtung 14 als Simulator ausgebildet. Diese Ausführungsform benötigt somit vergleichsweise wenig Bauraum. Zusätzlich können die Betätigungselement-Ankopplungs-Einrichtung 14 und der Hauptbremszylinder 20 in einem gemeinsamen Gehäuse 150/in einer gemeinsamen Bohrung mit einer festen Wand 152 zwischen der Betätigungselement-Ankopplungs-Einrichtung 14 und dem Hauptbremszylinder 20 angeordnet sein, wodurch der Bauraumbedarf zusätzlich reduzierbar und die Montage des Bremssystems vereinfachbar ist. Außerdem werden nur drei verstellbare Kolben 12, 22 und 24 benötigt.

Fig. 4 zeigt eine schematische Teildarstellung einer vierten Ausführungsform des Bremssystems.

Auch bei dem in Fig. 4 schematisch teilweise wiedergegebenen Bremssystem ist die Simulatorfeder 64 in der ersten Innenkammer 16 der Betätigungselement-Ankopplungs-Einrichtung 14 angeordnet. Außerdem sind die als Simulator ausgebildete Betätigungselement-Ankopplungs-Einrichtung 14 und der Hauptbremszylinder in einem gemeinsamen Gehäuse 150/einer gemeinsamen Bohrung ausgebildet.

Als Ergänzung umfasst die Betätigungselement-Ankopplungs-Einrichtung 14 einen die erste Innenkammer 16 und eine zweite Druckkammer 160 begrenzenden verschiebbaren Innenkolben 162, welcher sich über die in der ersten Innenkammer 16 angeordnete Simulatorfeder 64 von dem ersten Kolben 12 abstützt. Eine Volumenabnahme der ersten Innenkammer 16 bewirkt aufgrund eines Verstellens des Innenkolbens 162 eine Verkleinerung der zweiten Druckkammer 160, während eine Volumenabnahme der ersten Innenkammer 16 durch das Verstellen des Innenkolbens 162 zu einer Vergrößerung der zweiten Druckkammer 160 führt. Eine feste Wand 164 zwischen der zweiten Druckkammer 160 und der ersten Druckkammer 54 des Hauptbremszylinders 20 weist eine Öffnung auf, durch welche ein Teil des zweiten Kolbens 22 des Hauptbremszylinders 20 ragt. Ein Durchsickern von Flüssigkeit kann beispielsweise über ein Dichtungsmittel zwischen der festen Wand 164 und dem durchragenden Teil des zweiten Kolbens 22 verhindert werden.

Der zweite Kolben 22 (und der weitere Kolben 24) stützen sich so an dem Innenkolben 162 ab, dass die auf dem ersten Kolben 12 übertragene Fahrerbremskraft zumindest teilweise über den Innenkolben 162 auf den zweiten Kolben 22 (und den weiteren Kolben 24) übertragbar ist. Die feste Wand 164 zwischen der zweiten Druckkammer 160 und der ersten Druckkammer 54 wird über die Leitung 50 mit dem darin eingesetzten ersten Ventil 52 überbrückt. Sofern das erste Ventil 52 in den zumindest teil geöffneten Zustand gesteuert ist, ist eine Volumenabnahme der zweiten Druckkammer 160 bei gleichzeitiger Volumenzunahme der ersten Druckkammer 54 möglich. Somit können die Kolben 12 und 162 gemeinsam verschoben werden, ohne dass die erste Innenkammer 16 verkleinert und damit die Simulatorfeder 64 deformiert/zusammengedrückt wird. Der Verstellbewegung des ersten Kolbens 12 wirkt somit nach einem Öffnen des ersten Ventils 52 keine Simulatorkraft entgegen. Zusätzlich werden der zweite Kolben 22 (und der weitere Kolben 24) zusammen mit den Innenkolben bewegt, was einen Druckaufbau in dem Hauptbremszylinder 20, und damit eine Steigerung des Bremsdrucks in dem mindestens einen (nicht skizzierten) Radbremszylinder bewirkt. Der Fahrer kann somit aktiv einbremsen.

Demgegenüber ist eine Volumenabnahme der zweiten Druckkammer 160 nach einem Schließen des ersten Ventils 52 unterbunden. Der Innenkolben 162, der zweite Kolben 22 und der weitere Kolben 24 können somit nicht mit dem ersten Kolben 12 mitbewegt werden. Stattdessen kann, sofern das zweite Ventil zumindest teilgeöffnet ist, ein Bremsmediumvolumen aus der ersten Innenkammer 16 in das Bremsmediumreservoir transferiert und damit die erste Innenkammer bei gleichzeitigem Zusammendrücken der Simulatorfeder 64 verkleinert werden. Der Fahrer hat somit auch bei dieser Ausführungsform nach einem "Abkoppeln" des Hauptbremszylinders 20 von dem Bremsbetätigungselement 10 ein vorteilhaftes (standartgemäßes) Bremsgefühl.

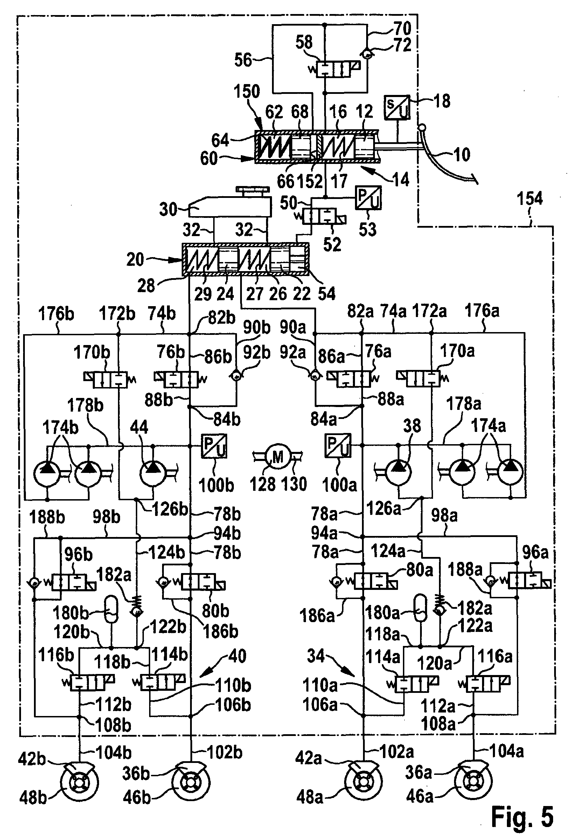

Fig. 5 zeigt eine schematische Darstellung einer fünften Ausführungsform des Bremssystems.

Das in Fig. 5 schematisch dargestellte Bremssystem unterscheidet sich von der Ausführungsform der Fig. 1 durch eine Weiterbildung der Bremskreise 34 und 40. Beispielsweise sind in die Ansaugleitungen 74a und 74b je ein Ansaugventil 170a und 170b eingesetzt. Über je einen zwischen dem Hauptbremszylinder 20 und einem Ansaugventil 170a und 170b ausgebildeten Verzweigungspunkt 172a oder 172b ist mindestens eine weitere Pumpe 174a und 174b über eine Leitung 176a oder 176b mit einer Ansaugleitung 74a und 74b verbunden. Eine weitere Leitung 178a oder 178b verläuft von der Pumpe 174a oder 174b zu der Zufuhrseite der Pumpe 38 oder 44. Alle Pumpen 38, 44, 174a und 174b können an der Welle 130 des einzigen benötigten Pumpenmotors 138 angeordnet werden.

Jeder der Bremskreise 34 und 40 weist auch eine Speicherkammer 180a oder 180b auf, welche beispielsweise als Niederdruck-Speicherkammer ausgebildet ist. Die Speicherkammer 180a oder 180b ist an eine von einem gemeinsamen Verzweigungspunkt 122a oder 122b zu einem Radauslassventil 116a oder 116b verlaufende Leitung 120a oder 120b angeschlossen. Des Weiteren ist je ein Rückschlagventil 182a und 182b in jeweils eine Leitung 124a und 124b von einem gemeinsamen Verzweigungspunkt 122a oder 122b zu einer Zufuhrleistung 74a oder 74b eingesetzt.

Die hier beschriebene Ausführungsform des Bremssystems ist zusätzlich zu dem Fahrereinbremsmodus und dem Fremdkraftbremsmodus auch in einem Dynamischen-Brems-Modus steuerbar, in welchem die auf den ersten Kolben 12 übertragene Fahrerbremskraft über das zumindest teilgeöffnete erste Ventil 52 zumindest teilweise auf den zweiten Kolben 22 so übertragbar ist, dass der zweite Kolben 22 aus seiner Ausgangsstellung zumindest teilweise in die zweite Innenkammer 16 des Hauptbremszylinders 20 hineinverstellbar ist. Gleichzeitig ist mittels der Pumpe 38 und 44 ein Zusatz-Bremsmediumvolumen aus der Speicherkammer 180a oder 180b in mindestens einem Radbremszylinder 36a, 36b, 42a und/oder 42b pumpbar.

Der Fahrer hat somit die Möglichkeit, während des Dynamischen-Brems-Modus direkt in den Hauptbremszylinder 20 hineinzubremsen. Dies bietet den Vorteil, dass eine geforderte Dynamik aufgrund der Unterstützung durch den Fahrer mit kleineren Leistungen des Pumpenmotors 128 erreicht wird. Durch die Reduzierung der Pumpen- und Motorleistungen können die Kosten und/oder der Bauraumbedarf des Bremssystems trotz der ausführbaren hochdynamischen Bremsungen reduziert werden.

Zum Steuern des Bremssystem in dem Dynamischen-Brems-Modus wird das erste Ventil 52 zumindest teilweise geöffnet, während das zweite Ventil 58 zumindest teilweise, vorzugsweise ganz, geschlossen wird. Somit sind hochdynamische Bremsungen auf einfache Weise realisierbar. (Die aufgrund von Druckschwankungen auf der Pumpeneingangsseite evtl. auftretenden Pedalrückwirkungen werden in einer derartigen Bremssituation, in welcher ein dynamisches Bremsen vorteilhaft ist, vom Fahrer kaum wahrgenommen.)

Die Rückschlagventile 182a und 182b zwischen der zugeordneten Pumpe 38 oder 44 und der angekoppelten Speicherkammer 180a oder 180b vermeiden eine Füllung dieser Speicherkammer 180a oder 180b bei entstehendem Druck im Hauptbremszylinder 20. Mittels der Ansaugventile 170a und 170b wird gleichzeitig eine Absenkung des Pumpeneingangsdrucks zur Leerung der Speicherkammern 180a und 180b erreicht.

Optional können die Radeinlassventile 80a, 80b, 96a und 96b parallel verlaufende Bypassleitungen 186a, 186b, 188a und 188b mit Rückschlagventilen aufweisen.

Alle oben beschriebenen Ausführungsformen sind in dem Fremdkraftbremsmodus als Brake-by-Wire-System ohne eine Rückwirkung der Hydraulik auf das Bremsbetätigungselement 10 einsetzbar. Aufgrund der geringen Ansaugverluste wird eine ausreichende Druckaufbaudynamik mit nur einem Pumpenmotor 130 erreicht, dessen Leistung und Baugröße mit den Werten des Antriebs eines elektromechanischen Bremskraftverstärkers vergleichbar ist.

Für die Pumpen 38, 44, 174a und 174b aller Ausführungsformen sind verschiedene Pumpentypen, wie beispielsweise Kolbenpumpen, Flügelzellenpumpen und/oder Zahnradpumpen, einsetzbar. Die in den Bremssystemen verbauten Ventile können Schaltventile oder Proportionalventile sein. Alle Bremssysteme können an unterschiedliche Bremskreisaufteilungen angepasst werden. Auch eine selbstverstärkende Ausführung der Radbremsen ist bei allen Bremsystemen möglich. Mit diesen wird eine beliebig häufige nutzbare Verstärkung in jedem Modus der Bremssysteme erzielt.

Das Verfahren zum Betreiben eines Bremssystems weist die anhand der Bremssysteme schon beschriebenen Verfahrensschritte auf. Auf eine genaue Beschreibung des Verfahrens wird deshalb verzichtet.

## Patentansprüche

1. Bremssystem für ein Fahrzeug mit
einem Bremsbetätigungselement (10);
einer Betätigungselement-Ankopplungs-Einrichtung (14) mit einem ersten Kolben (12), welcher derart an dem Bremsbetätigungselement (10) angeordnet ist, dass der erste Kolben (12) mittels einer Betätigung des Bremsbetätigungselements (10) zumindest teilweise in eine erste Innenkammer (16) der Betätigungselement-Ankopplungs-Einrichtung (14) hineinverstellbar ist;
einem Hauptbremszylinder (20) mit einem zweiten Kolben (22), wobei das Bremssystem zumindest in einem Fahrereinbremsmodus betreibbar ist, in welchem eine auf den ersten Kolben (12) übertragene Fahrerbremskraft zumindest teilweise auf den zweite Kolben (22) so übertragbar ist, dass der zweite Kolben (22) aus seiner Ausgangsstellung zumindest teilweise in eine zweite Innenkammer (26) des Hauptbremszylinders (20) hineinverstellbar ist, und das Bremssystem aus dem Fahrereinbremsmodus zumindest in einen Fremdkraftbremsmodus steuerbar ist;
einem Bremsmediumreservoir (30), welches bei einem Vorliegen des zweiten Kolbens (22) in seiner Ausgangsstellung über eine Schnüffelbohrung (32) mit der zweiten Innenkammer (26) hydraulisch verbunden ist, wobei die Schnüffelbohrung (32) zwischen dem Bremsmediumreservoir (30) und der zweiten Innenkammer (26) bei einem Verstellen des zweiten Kolbens (22) um einen Mindestverstellweg abgedichtet ist; und
mindestens einem an dem Hauptbremszylinder (20) angeordneten und mit der zweiten Innenkammer (26) hydraulisch verbundenen ersten Bremskreis (34) mit mindestens einem ersten Radbremszylinder (36a, 42a) und mindestens einer ersten Pumpe (38), wobei in dem Fremdkraftbremsmodus mittels der mindestens einen ersten Pumpe (38) ein Bremsmediumvolumen aus dem Bremsmediumreservoir (30) über den Hauptbremszylinder (20) in den mindestens einen ersten Radbremszylinder (36a, 42a) pumpbar ist; **gekennzeichnet durch**
ein erstes Ventil (52), über welches eine mittels des zweiten Kolbens (22) von der
zweite Innenkammer (26) abgegrenzte erste Druckkammer (54) mit der ersten Innenkammer (16) oder einer mittels eines verschiebbaren Innenkolbens (162) von der ersten Innenkammer (16) abgegrenzten zweiten Druckkammer (160) hydraulisch verbunden ist, wobei das Bremssystem mittels des ersten Ventils (52) aus dem Fahrereinbremsmodus in den Fremdkraftbremsmodus steuerbar ist, in welchem ein Verstellen des zweiten Kolbens (22) um den Mindestverstellweg trotz der auf den ersten Kolben (12) übertragenen Fahrerbremskraft unterbunden ist.

2. Bremssystem nach Anspruch 1, wobei das erste Ventil (52) ein stromlos offenes Ventil ist.

3. Bremssystem nach Anspruch 1 oder 2, wobei das Bremssystem eine in der ersten Innenkammer (16) angeordnete Simulatorfeder (64) umfasst und die erste Innenkammer (16) mit der darin angeordneten Simulatorfeder (64) über ein zweites Ventil (58) mit dem Bremsmediumreservoir (30) so verbunden ist, dass in dem Fremdkraftbremsmodus bei geöffnetem zweiten Ventil (58) die auf den ersten Kolben (12) übertragene Fahrerbremskraft so auf die Simulatorfeder (64) übertragbar ist, dass die Simulatorfeder (64) mittels der Fahrerbremskraft deformierbar ist.

4. Bremssystem nach Anspruch 1 oder 2, wobei das Bremssystem eine weitere Kolben-Zylinder-Einheit (60) mit einer Vorkammer (66) und einer mit einer Simulatorfeder (64) ausgestatteten Simulatorkammer (62) umfasst, wobei die erste Innenkammer (16) über ein zweites Ventil (58) mit der Vorkammer (66) der weiteren Kolben-Zylinder-Einheit (60) so verbunden ist, dass in dem Fremdkraftbremsmodus bei geöffnetem zweiten Ventil (58) die auf den ersten Kolben (12) übertragene Fahrerbremskraft so auf die Simulatorfeder (64) übertragbar ist, dass die Simulatorfeder (64) mittels der Fahrerbremskraft deformierbar ist.

5. Bremssystem nach Anspruch 3 oder 4, wobei das zweite Ventil (58) ein stromlos geschlossenes Ventil ist.

6. Bremssystem nach einem der vorhergehenden Ansprüche, wobei das Bremssystem eine Steuervorrichtung umfasst, welche dazu ausgelegt ist, das Bremssystem zumindest aus dem Fahrereinbremsmodus in den Fremdkraftbremsmodus und aus dem Fremdkraftbremsmodus in den Fahrereinbremsmodus zu steuern, eine von einem Sensor (18, 53) bereitgestellte Betätigungsgröße bezüglich der Betätigung des Bremsbetätigungselements zu empfangen, ein in den mindestens einen ersten Radbremszylinder (36a, 42a) zu verschiebendes Soll-Bremsmediumvolumen unter Berücksichtigung zumindest der empfangenen Betätigungsgröße festzulegen, und die mindestens eine erste Pumpe (38) des in den Fremdkraftbremsmodus gesteuerten Bremssystems so anzusteuern, dass mittels der mindestens einen ersten Pumpe (38) ein dem Soll-Bremsmediumvolumen entsprechendes Bremsmediumvolumen aus dem Bremsmediumreservoir (30) über den Hauptbremszylinder (20) in den mindestens einen ersten Radbremszylinder (36a, 42a) gepumpt wird.

7. Bremssystem nach Anspruch 6, wobei das Bremssystem zusätzlich in einen Dynamischen-Brems-Modus steuerbar ist, in welchem die auf den ersten Kolben (12) übertragene Fahrerbremskraft auf den zweite Kolben (22) zumindest teilweise so übertragbar ist, dass der zweite Kolben (22) aus seiner Ausgangsstellung zumindest teilweise in die zweite Innenkammer (26) des Hauptbremszylinders (20) hineinverstellbar ist und mittels der mindestens einen ersten Pumpe (38) oder mindestens einer weiteren Pumpe (174a) ein Zusatz-Bremsmediumvolumen aus mindestens einer Speicherkammer (180a) des mindestens einen Bremskreises (34) in den mindestens einen ersten Radbremszylinder (36a, 42a) pumpbar ist.

8. Bremssystem nach einem der vorhergehenden Ansprüche, wobei eine Ansaugleitungsweglänge von einer Ansaugseite der ersten Pumpe (38) zu dem Hauptbremszylinder kleiner als 25 cm, vorzugsweise kleiner als 20 cm, insbesondere kleiner als 15 cm, ist.

9. Bremssystem nach einem der vorhergehenden Ansprüche, wobei die erste Innenkammer (16) der Betätigungselement-Ankopplungs-Einrichtung (14) über das erste Ventil (52) mit der ersten Druckkammer (54) des Hauptbremszylinders (20) verbunden ist, und wobei der zweite Kolben (22) des Hauptbremszylinders (20) die zweite Innenkammer (26) und die erste Druckkammer (54) begrenzt.

10. Bremssystem nach Anspruch 3, wobei die Betätigungselement-Ankopplungs-Einrichtung (14) den die erste Innenkammer (16) und die zweite Druckkammer (160) begrenzenden verschiebbaren Innenkolben (162) umfasst, welcher sich über die Simulatorfeder (64) von dem ersten Kolben (12) abstützt, wobei der zweite Kolben (22) des Hauptbremszylinders (20) die zweite Innenkammer (26) und die erste Druckkammer (54) begrenzt und derart an dem Innenkolben (162) angeordnet ist, dass die auf den ersten Kolben (12) übertragene Fahrerbremskraft zumindest teilweise über den Innenkolben (162) auf den zweite Kolben (22) übertragbar ist, und wobei die zweite Druckkammer (160) über das erste Ventil (52) mit der ersten Druckkammer (54) verbunden ist.

11. Bremssystem nach einem der vorhergehenden Ansprüche, wobei in dem Fremdkraftbremsmodus auch bei einer Betätigung des Bremsbetätigungselements (10), über welche der erste Kolben (12) aus seiner Ausgangsstellung verstellt wird, ein Mitverstellen des zweiten Kolbens (22) aus seiner Ausgangstellung um einen Verstellweg von zumindest dem Mindestverstellweg unterbunden ist.

12. Verfahren zum Betreiben eines Bremssystems für ein Fahrzeug mit einem Bremsbetätigungselement (10), einer Betätigungselement-Ankopplungs-Einrichtung (14) mit einem ersten Kolben (12), welcher bei einer Betätigung des Bremsbetätigungselements (10) zumindest teilweise in eine erste Innenkammer (16) der Betätigungselement-Ankopplungs-Einrichtung (14) hineinverstellt wird, einem Hauptbremszylinder (20) mit einem zweiten Kolben (22), einem Bremsmediumreservoir (30), welches bei einem Vorliegen des zweiten Kolbens (22) in seiner Ausgangsstellung über eine Schnüffelbohrung (32) mit der zweiten Innenkammer (26) des Hauptbremszylinders (20) hydraulisch verbunden ist, wobei die Schnüffelbohrung (32) zwischen dem Bremsmediumreservoir (30) und der zweiten Innenkammer (26) bei einem Verstellen des zweiten Kolbens (22) um einen Mindestverstellweg unterbunden wird, und mindestens einem an dem Hauptbremszylinder (20) angeordneten und mit der zweiten Innenkammer (26) hydraulisch verbundenen Bremskreis (34) mit mindestens einem Radbremszylinder (36a, 42a) und mindestens einer Pumpe (38), mit den Schritten:
Betreiben des Bremssystems in einem Fahrereinbremsmodus, in welchem eine auf den ersten Kolben (12) aufgebrachte Fahrerbremskraft auf den zweite Kolben (22) so übertragen wird, dass der zweite Kolben (22) aus seiner Ausgangsstellung zumindest teilweise in die zweite Innenkammer (26) des Hauptbremszylinders (20) hineinverstellt wird;
**gekennzeichnet durch** die Schritte:
Steuern des Bremssystems aus dem Fahrereinbremsmodus zumindest in einen Fremdkraftbremsmodus **durch** Schließen eines Ventils (52), über welches eine mittels des zweiten Kolbens von der zweite Innenkammer (26) abgegrenzte erste Druckkammer (54) mit der ersten Innenkammer (16) oder einer mittels eines verschiebbaren Innenkolbens (162) von der ersten Innenkammer (16) abgegrenzten zweiten Druckkammer (160) hydraulisch verbunden ist, zum Unterbinden eines Verstellens des zweiten Kolbens (22) um den Mindestverstellweg trotz der auf den ersten Kolben (12) aufgebrachten Fahrerbremskraft;
Ermitteln einer Betätigungsgröße bezüglich der Betätigung des Bremsbetätigungselements (10);
Festlegen eines in den mindestens einen Radbremszylinder (36a, 42a) zu verschiebenden Soll-Bremsmediumvolumens unter Berücksichtigung der ermittelten Betätigungsgröße; und
Ansteuern der mindestens einen Pumpe (38) so, dass mittels der mindestens einen Pumpe (38) ein dem Soll-Bremsmediumvolumen entsprechendes Bremsmediumvolumen aus dem Bremsmediumreservoir (30) über den Hauptbremszylinder (20) in den mindestens einen Radbremszylinder (36a, 42a) gepumpt wird.

## Claims

1. Brake system for a vehicle comprising
a brake actuating element (10);
an actuating element coupling device (14) with a first piston (12) which is arranged on the brake actuating element (10) in such a way that the first piston (12) can be moved by means of an actuation of the brake actuating element (10) at least partially into a first inner chamber (16) of the actuating element coupling device (14);
a master brake cylinder (20) with a second piston (22), wherein the brake system can be operated at least in a driver braking mode in which a driver braking force transmitted to the first piston (12) can be transmitted at least partially to the second piston (22) such that the second piston (22) can be moved out of its starting position at least partially into a second inner chamber (26) of the master brake cylinder (20), and the brake system can be controlled out of the driver braking mode at least into an external force braking mode;
a braking medium reservoir (30) which is hydraulically connected via a snifting bore (32) to the second inner chamber (26) when the second piston (22) is in its starting position, wherein the snifting bore (32) between the braking medium reservoir (30) and the second inner chamber (26) is sealed during a movement of the second piston (22) by a minimum movement travel; and
at least one first brake circuit (34) which is arranged on the master brake cylinder (20), is hydraulically connected to the second inner chamber (26) and has at least one first wheel brake cylinder (36a, 42a) and at least one first pump (38), wherein, in the external force braking mode, a braking medium volume can be pumped by means of the at least one first pump (38) out of the braking medium reservoir (30) via the master brake cylinder (20) into the at least one first wheel brake cylinder (36a, 42a);
**characterized by**
a first valve (52) via which a first pressure chamber (54) delimited by means of the second piston (22) from the second inner chamber (26) is hydraulically connected to the first inner chamber (16) or a second pressure chamber (160) delimited by means of a displaceable inner piston (162) from the first inner chamber (16), wherein the brake system can be controlled by means of the first valve (52) out of the driver braking mode into the external force braking mode in which a movement of the second piston (22) by the minimum movement travel is suppressed in spite of the driver braking force transmitted to the first piston (12).

2. Brake system according to Claim 1, wherein the first valve (52) is a valve which is open in the currentless state.

3. Brake system according to Claim 1 or 2, wherein the brake system comprises a simulator spring (64) arranged in the first inner chamber (16), and the first inner chamber (16), together with the simulator spring (64) arranged therein, is connected via a second valve (58) to the braking medium reservoir (30) such that, in the external force braking mode, with the second valve (58) open, the driver braking force transmitted to the first piston (12) can be transmitted to the simulator spring (64) such that the simulator spring (64) can be deformed by means of the driver braking force.

4. Brake system according to Claim 1 or 2, wherein the brake system comprises a further piston-cylinder unit (60) with a pre-chamber (66) and with a simulator chamber (62) equipped with a simulator spring (64), wherein the first inner chamber (16) is connected via a second valve (58) to the pre-chamber (66) of the further piston-cylinder unit (60) such that, in the external force braking mode, with the second valve (58) open, the driver braking force transmitted to the first piston (12) can be transmitted to the simulator spring (64) such that the simulator spring (64) can be deformed by means of the driver braking force.

5. Brake system according to Claim 3 or 4, wherein the second valve (58) is a valve which is closed in the currentless state.

6. Brake system according to one of the preceding claims, wherein the brake system comprises a control device which is designed to control the brake system at least out of the driver braking mode into the external force braking mode and out of the external force braking mode into the driver braking mode, to receive an actuating variable, supplied by a sensor (18, 53), with respect to the actuation of the brake actuating element, to establish a nominal braking medium volume to be displaced into the at least one first wheel brake cylinder (36a, 42a) while taking into account at least the received actuating variable, and to activate the at least one first pump (38) of the brake system controlled into the external force braking mode such that a braking medium volume corresponding to the nominal braking medium volume can be pumped by means of the at least one first pump (38) out of the braking medium reservoir (30) via the master brake cylinder (20) into the at least one first wheel brake cylinder (36a, 42a).

7. Brake system according to Claim 6, wherein the brake system can be additionally controlled into a dynamic braking mode in which the driver braking force transmitted to the first piston (12) can be transmitted at least partially to the second piston (22) such that the second piston (22) can be moved out of its starting position at least partially into the second inner chamber (26) of the master brake cylinder (20) and an additional braking medium volume can be pumped by means of the at least one first pump (38) or at least one further pump (174a) out of at least one storage chamber (180a) of the at least one brake circuit (34) into the at least one first wheel brake cylinder (36a, 42a).

8. Brake system according to one of the preceding claims, wherein a suction line path length from a suction side of the first pump (38) to the master brake cylinder is less than 25 cm, preferably less than 20 cm, in particular less than 15 cm.

9. Brake system according to one of the preceding claims, wherein the first inner chamber (16) of the actuating element coupling device (14) is connected via the first valve (52) to the first pressure chamber (54) of the master brake cylinder (20), and wherein the second piston (22) of the master brake cylinder (20) delimits the second inner chamber (26) and the first pressure chamber (54).

10. Brake system according to Claim 3, wherein the actuating element coupling device (14) comprises the displaceable inner piston (162) which delimits the first inner chamber (16) and the second pressure chamber (160) and which is supported via the simulator spring (64) of the first piston (12), wherein the second piston (22) of the master brake cylinder (20) delimits the second inner chamber (26) and the first pressure chamber (54) and is arranged on the inner piston (162) in such a way that the driver braking force transmitted to the first piston (12) can be transmitted at least partially via the inner piston (162) to the second piston (22), and wherein the second pressure chamber (160) is connected via the first valve (52) to the first pressure chamber (54).

11. Brake system according to one of the preceding claims, wherein, in the external force braking mode, even during an actuation of the brake actuating element (10) via which the first piston (12) is moved out of its starting position, a concomitant movement of the second piston (22) out of its starting position by a movement travel of at least the minimum movement travel is suppressed.

12. Method for operating a brake system for a vehicle comprising a brake actuating element (10), an actuating element coupling device (14) with a first piston (12) which, during an actuation of the brake actuating element (10), is moved at least partially into a first inner chamber (16) of the actuating element coupling device (14), a master brake cylinder (20) with a second piston (22), a braking medium reservoir (30) which is hydraulically connected via a snifting bore (32) to the second inner chamber (26) of the master brake cylinder (20) when the second piston (22) is in its starting position, wherein the snifting bore (32) between the braking medium reservoir (30) and the second inner chamber (26) is suppressed during a movement of the second piston (22) by a minimum movement travel, and at least one brake circuit (34) which is arranged on the master brake cylinder (20), is hydraulically connected to the second inner chamber (26) and has at least one wheel brake cylinder (36a, 42a) and at least one pump (38), comprising the steps:
operating the brake system in a driver braking mode in which a driver braking force applied to the first piston (12) is transmitted to the second piston (22) such that the second piston (22) is moved out of its starting position at least partially into the second inner chamber (26) of the master brake cylinder (20);
**characterized by** the steps:
controlling the brake system out of the driver braking mode at least into an external force braking mode by closing a valve (52) via which a first pressure chamber (54) delimited by means of the second piston from the second inner chamber (26) is hydraulically connected to the first inner chamber (16) or a second pressure chamber (160) delimited by means of a displaceable inner piston (162) from the first inner chamber (16), in order to suppress a movement of the second piston (22) by the minimum movement travel in spite of the driver braking force transmitted to the first piston (12);
determining an actuating variable with respect to the actuation of the brake actuating element (10);
establishing a nominal braking medium volume to be displaced into the at least one wheel brake cylinder (36a, 42a) while taking into account the actuating variable determined; and
activating the at least one pump (38) such that a braking medium volume corresponding to the nominal braking medium volume is pumped by means of the at least one pump (38) out of the braking medium reservoir (30) via the master brake cylinder (20) into the at least one wheel brake cylinder (36a, 42a).

## Revendications

1. Système de freinage pour un véhicule avec :
un élément d'actionnement de frein (10) ;
un dispositif de couplage d'élément d'actionnement (14) avec un premier piston (12) disposé de telle sorte au niveau de l'élément d'actionnement de frein (10) que le premier piston (12) peut être déplacé au moins en partie dans une première chambre intérieure (16) du dispositif de couplage d'élément d'actionnement (14) par actionnement de l'élément d'actionnement de frein (10) ;
un maître-cylindre de frein (20) avec un deuxième piston (22), le système de freinage pouvant au moins être entraîné dans un mode de freinage par le conducteur dans lequel une force de freinage par le conducteur transmise au premier piston (12) peut être transmise au moins en partie au deuxième piston (22) de telle sorte que le deuxième piston (22) peut être déplacé, en partant de sa position de départ, au moins en partie dans une deuxième chambre intérieure (26) du maître-cylindre de frein (20) et le système de freinage peut être commandé d'un mode de freinage par lé conducteur au moins dans un mode de freinage par une force externe ;
un réservoir d'agent de freinage (30) relié sur le plan hydraulique, en présence du deuxième piston (22) dans sa position de départ, via un reniflard (32), à la deuxième chambre intérieure (26), le reniflard (32) étant étanchéifié entre le réservoir d'agent de freinage (30) et la deuxième chambre intérieure (26) par un déplacement du deuxième piston (22) sur une course de déplacement minimale ; et
au moins un premier circuit de freinage (34) disposé au niveau du maître-cylindre de frein (20) et relié sur le plan hydraulique à la deuxième chambre intérieure (26) avec au moins un premier cylindre de freinage de roue (36a, 42a) et au moins une première pompe (38), sachant que dans le mode de freinage par une force externe, un volume d'agent de freinage peut être pompé, à l'aide de l'au moins une première pompe (38), hors du réservoir d'agent de freinage (30) via le maître-cylindre de frein (20) jusque dans l'au moins un premier cylindre de freinage de roue (36a, 42a) ;
**caractérisé par** :
une première soupape (52) via laquelle une première chambre de pression (54) délimitée, à l'aide du deuxième piston (22), par la deuxième chambre intérieure (26) est reliée sur le plan hydraulique à la première chambre intérieure (16) ou à une deuxième chambre de pression (160) à l'aide d'un piston intérieur (162) coulissant délimité par la première chambre intérieure (16), le système de freinage pouvant être commandé, à l'aide de la première soupape (52), du mode de freinage par le conducteur dans le mode de freinage par une force externe dans lequel un déplacement du deuxième piston (22) de la course de déplacement minimale est entravé malgré la force de freinage par le conducteur transmise au premier piston (12).

2. Système de freinage selon la revendication 1, la première soupape (52) étant une soupape ouverte sans courant.

3. Système de freinage selon la revendication 1 ou 2, le système de freinage comprenant un ressort de simulation (64) disposé dans la première chambre intérieure (16) et la première chambre intérieure (16) avec le ressort de simulation (64) disposé à l'intérieur étant reliée de telle sorte, via une deuxième soupape (58), au réservoir d'agent de freinage (30), dans le mode de freinage par une force externe, que lorsque la deuxième soupape (58) est ouverte, la force de freinage par le conducteur transmise au premier piston (12) peut être transmise de telle sorte au ressort de simulation (64) que le ressort de simulation (64) peut être déformé par la force de freinage par le conducteur.

4. Système de freinage selon la revendication 1 ou 2, le système de freinage comprenant une unité piston-cylindre (60) supplémentaire avec une préchambre (66) et une chambre de simulation (62) dotée d'un ressort de simulation (64), la première chambre intérieure (16) étant reliée de telle sorte à la préchambre (66) de l'unité piston-cylindre (60) supplémentaire, via une deuxième soupape (58), que dans le mode de freinage par une force externe, en présence d'une deuxième soupape (58) ouverte, la force de freinage par le conducteur transmise au premier piston (12) peut être transmise de telle sorte au ressort de simulation (64) que le ressort de simulation (64) peut être déformé à l'aide de la force de freinage par le conducteur.

5. Système de freinage selon la revendication 3 ou 4, la deuxième soupape (58) étant une soupape fermée sans courant.

6. Système de freinage selon l'une quelconque des revendications précédentes, le système de freinage comprenant un dispositif de commande conçu pour commander le système de freinage au moins du mode de freinage par le conducteur dans le mode de freinage par une force externe et du mode de freinage par une force externe dans le mode de freinage par le conducteur, pour recevoir une grandeur d'actionnement relative à l'actionnement de l'élément d'actionnement de frein mise à disposition par un capteur (18, 53), pour déterminer un volume d'agent de freinage théorique à amener dans l'au moins un premier cylindre de freinage de roue (36a, 42a) en tenant compte d'au moins la grandeur d'actionnement reçue et pour commander l'au moins une première pompe (38) du système de freinage commandé dans le mode de freinage par une force externe de telle sorte, à l'aide de l'au moins une première pompe (38), qu'un volume d'agent de freinage correspondant au volume d'agent de freinage théorique est pompé hors du réservoir d'agent de freinage (30) via le maître-cylindre de frein (20) pour rejoindre l'au moins un premier cylindre de freinage de roue (36a, 42a).

7. Système de freinage selon la revendication 6, le système de freinage pouvant en outre être commandé dans un mode de freinage dynamique dans lequel la force de freinage par le conducteur transmise au premier piston (12) peut être transmise au moins en partie de telle sorte au deuxième piston (22) que le deuxième piston (22) peut être déplacé, à partir de sa position de départ, au moins en partie dans la deuxième chambre intérieure (26) du maître-cylindre de frein (20) et qu'un volume d'agent de freinage supplémentaire peut être pompé, à l'aide de l'au moins une première pompe (38) ou d'au moins une pompe (174a) supplémentaire, à partir d'au moins une chambre de réserve (180a) de l'au moins un circuit de freinage (34) jusque dans l'au moins un premier cylindre de freinage de roue (36a, 42a).

8. Système de freinage selon l'une quelconque des revendications précédentes, une longueur de parcours de conduite d'aspiration d'un côté d'aspiration de la première pompe (38) au maître-cylindre de frein étant inférieure à 25 cm, de préférence inférieure à 20 cm, notamment inférieure à 15 cm.

9. Système de freinage selon l'une quelconque des revendications précédentes, la première chambre intérieure (16) du dispositif de couplage d'élément d'actionnement (14) étant reliée à la première chambre de pression (54) du maître-cylindre de frein (20) via la première soupape (52) et le deuxième piston (22) du maître-cylindre de frein (20) délimitant la deuxième chambre intérieure (26) et la première chambre de pression (54).

10. Système de freinage selon la revendication 3, le dispositif de couplage d'élément d'actionnement (14) comprenant le piston intérieur (162) coulissant délimitant la première chambre intérieure (16) et la deuxième chambre de pression (160), ledit piston étant étayé, via le ressort de simulation (64), par le premier piston (12), le deuxième piston (22) du maître-cylindre de frein (20) délimitant la deuxième chambre intérieure (26) et la première chambre de pression (54) et étant disposé de telle sorte au niveau du piston intérieur (162) que la force de freinage par le conducteur transmise au premier piston (12) peut être transmise au moins en partie au deuxième piston (22) via le piston intérieur (162) et la deuxième chambre de pression (160) étant reliée à la première chambre de pression (54) via la première soupape (52).

11. Système de freinage selon l'une quelconque des revendications précédentes, un déplacement conjoint du deuxième piston (22) hors de sa position de départ étant également entravé sur sa course de déplacement d'au moins la course de déplacement minimale, dans le mode de freinage par une force externe, en cas d'actionnement de l'élément d'actionnement de frein (10) permettant de sortir le premier piston (12) hors de sa position de départ.

12. Procédé d'actionnement d'un système de freinage pour un véhicule avec un élément d'actionnement de frein (10), un dispositif de couplage d'élément d'actionnement (14) avec un premier piston (12) déplacé au moins en partie dans une première chambre intérieure (16) du dispositif de couplage d'élément d'actionnement (14) lors d'un actionnement de l'élément d'actionnement de frein (10), un maître-cylindre de frein (20) avec un deuxième piston (22), un réservoir d'agent de freinage (30) relié sur le plan hydraulique, en présence du deuxième piston (22) dans sa position de départ, à la deuxième chambre intérieure (26) du maître-cylindre de frein (20) via un reniflard (32), sachant que le reniflard (32) est entravé d'une course de déplacement minimale entre le réservoir d'agent de freinage (30) et la deuxième chambre intérieure (26) en cas de déplacement du deuxième piston (22), et au moins un circuit de freinage (34) disposé au niveau du maître-cylindre de frein (20) et relié sur le plan hydraulique à la deuxième chambre intérieure (26) avec au moins un cylindre de freinage de roue (36a, 42a) et au moins une pompe (38), avec les étapes suivantes :
entraînement du système de freinage dans un mode de freinage par le conducteur dans lequel une force de freinage par le conducteur appliquée au premier piston (12) est transmise de telle sorte au deuxième piston (22) que le deuxième piston (22) est déplacé, à partir de sa position de départ, au moins en partie dans la deuxième chambre intérieure (26) du maître-cylindre de frein (20) ;
**caractérisé par** les étapes suivantes :
commande du système de freinage du mode de freinage par le conducteur au moins dans un mode de freinage par une force externe par fermeture d'une soupape (52) via laquelle une première chambre de pression (54) délimitée par la deuxième chambre intérieure (26) par le biais du deuxième piston est reliée sur le plan hydraulique à la première chambre intérieure (16) ou à une deuxième chambre de pression (160) délimitée par la première chambre intérieure (16) par le biais d'un piston intérieur (162) coulissant, pour entraver un déplacement du deuxième piston (22) de la course de déplacement minimale malgré la force de freinage par le conducteur appliquée sur le premier piston (12) ;
calcul d'une grandeur d'actionnement relative à l'actionnement de l'élément d'actionnement de frein (10) ;
détermination d'un volume d'agent de freinage théorique à amener dans au moins un cylindre de freinage de roue (36a, 42a) en tenant compte de la grandeur d'actionnement calculée ; et
commande de l'au moins une pompe (38) de telle sorte qu'un volume d'agent de freinage correspondant au volume d'agent de freinage théorique est pompé à l'aide de l'au moins une pompe (38), du réservoir d'agent de freinage (30) jusque dans l'au moins un cylindre de freinage de roue (36a, 42a), via le maître-cylindre de frein (20).
